# EUROPÄISCHE PATENTSCHRIFT

(11) **EP 3 247 853 B1**
(45) Veröffentlichungstag und Bekanntmachung des Hinweises auf die Patenterteilung: **13.02.2019**
(21) Anmeldenummer: 15831047.4
(22) Anmeldetag: 09.12.2015
(51) Int. Cl.: E05B 81/40, E05B 79/20, F16H 25/20

(54) **KRAFTFAHRZEUGSCHLOSS**
MOTOR VEHICLE LOCK
SERRURE DE VÉHICULE AUTOMOBILE

(30) Priorität: 20.01.2015 DE 102015100750
(43) Veröffentlichungstag der Anmeldung: 29.11.2017
(73) Patentinhaber: Kiekert AG, 42579 Heiligenhaus (DE)
(72) Erfinder: STURM, Christian, 47804 Krefeld (DE)
(86) Internationale Anmeldenummer: PCT/DE2015/100526
(87) Internationale Veröffentlichungsnummer: WO 2016/116082

(56) Entgegenhaltungen:
- EP-A1- 1 451 478
- EP-A2- 2 075 395
- DE-A1-102009 028 316
- DE-A1-102011 075 611
- DE-U1-202013 004 785

## Beschreibung

Die Erfindung betrifft eine Stelleinheit mit einem Stellglied, insbesondere einem Zuziehantrieb für ein Kraftfahrzeugschloss, aufweisend eine Antriebseinheit, ein Gehäuse, eine Spindelmutter und eine Spindel, wobei die Spindelmutter im Gehäuse der Stelleinheit aufgenommen ist und einem Bowdenzug, wobei der Bowdenzug mit der Spindel verbunden ist.

Kraftfahrzeuge werden mehr und mehr mit technischen Funktionen ausgestattet, die eine Bedienung des Kraftfahrzeugs erleichtern und/oder eine Komfortfunktion darstellen, so dass der Nutzer eine Bedienerfreundlichkeit erfährt und Fehlfunktionen, wie beispielsweise eine unverschlossene Seitentür, vermieden werden. Eine Komfortfunktion ist es dabei, dass die Seitentüren automatisch zugezogen werden. Ein Zuziehen erfolgt hierbei dann, wenn der Nutzer die Seitentür nur leicht schließt, so dass das Seitentürschloss lediglich in eine Vorrastposition gelangt, von der aus dann die Seitentür automatisch vollständig geschlossen wird. Dies erleichtert dem Benutzer die Bedienung dahingehend, dass nur geringe Kräfte zum vollständigen Schließen einer Kraftfahrzeugtür benötigt werden. Dies kann insbesondere dann von Vorteil sein, wenn einerseits große Türen und/oder große Dichtungsdrücke der Tür entgegenstehen.

Sind hier beispielhaft Seitentüren genannt, so soll dies nicht beschränkend gelten, sondern bezieht sich die Stelleinheit mit dem Stellglied auch auf andere Funktionen im Kraftfahrzeug wie beispielsweise ein elektromotorisches Zuziehen einer Frontklappe, einer Heckklappe oder einer Schiebetür. Dies sind aber wiederum auch lediglich Beispiele, die das Einsatzgebiet der Stelleinheit nicht beschränken. Vielmehr kann die Stelleinheit immer dann zum Einsatz kommen, wenn mittels eines Bowdenzugs Kräfte in eine Funktionseinheit eines Kraftfahrzeugs eingeleitet werden müssen.

Beispielhaft kann die Stelleinheit ein Zuziehantrieb für ein Kraftfahrzeugschloss sein. Mittels der Zuzieheinheit kann eine noch nicht vollständig geschlossene Seitentür, die in der Vorrast vorliegt, in eine Hauptrast überführt werden. In der Hauptrast ist die Seitentür dann vollumfänglich geschlossen. Dabei muss der Zuziehantrieb die Tür gegen die Kraft der umlaufenden Türdichtung zuziehen, wobei je nach Größe der Tür unterschiedliche Kräfte durch den Zuziehantrieb zur Verfügung zu stellen sind.

Aus der DE 20 2008 007 310 U1 ist ein Kraftfahrzeugtürverschluss mit einem Gesperre und mit einer Zuzieheinrichtung mit einem elektrischen Antrieb bekannt geworden, wobei die Zuzieheinrichtung auf das Gesperre des Kraftfahrzeugtürverschlusses wirkt. Mittels einer Hebelmechanik, die über eine Zuziehklinke unmittelbar auf das Gesperre wirkt, kann das Gesperre von einer Vorrast in eine Hauptrast überführt werden. Die hierzu eingesetzte Hebelmechanik, einschließlich der Zuziehklinke, wird über einen Spindelantrieb betätigt. Die Spindelmutter wiederum wird über einen Motor mit einem nachgeschalteten Getriebe über die Spindel bewegt. Beim Zuziehen führt die Spindelmutter eine Vorwärtsbewegung aus, wobei der Stellweg der Spindelmutter durch einen Endlagenpuffer begrenzt wird. Die Endlage der Spindelmutter wird zusätzlich mittels eines Positionssensors und über einen Taststift erfasst, so dass der Motor bzw. die Antriebseinheit abschaltbar ist. Insbesondere beim Erreichen der Endlage der Spindelmutter wirkt eine große Widerlagerkraft auf das Spindelgetriebe, die über das Gehäuse der Antriebseinheit aufgenommen werden muss.

Aus der DE 10 2012 218 650 A1 ist eine Stelleinheit mit einem Stellglied und einem Antrieb für ein Bewegen des Stellglieds und einem an das Stellglied angeschlossenen Bowdenzug bekannt geworden. Beschrieben ist eine Stelleinheit und insbesondere ein Zuziehantrieb, die wiederum mit einem elektrischen Antrieb und einem Spindelantrieb versehen ist. Die Spindel als Stellglied des Zuziehantriebs verzichtet auf die Positionssensoren, wie beispielsweise Mikroschalter, und verfährt zur Positionserkennung mittels eines Anschlags gegen die Innenseite des Gehäuses.

An die Spindel ist ein Bowdenzug angeschlossen, so dass mittels der Spindel die Bowdenzugseele betätigbar ist. Insbesondere beim Zurückstellen der Spindel, was beispielhaft durch eine Vorwärtsbewegung der Spindel erzeugt wird, wird einerseits die Bowdenzugseele aus dem Gehäuse des Antriebs herausbewegt, wobei die Spindel mit dem Anschlag gegen die Innenseite des Gehäuses verfährt. Das Anschlagen des Anschlags am Gehäuse wird hierbei dadurch detektiert, dass die erhöhte Stromaufnahme des elektrischen Spindelantriebs erfasst wird und der Motor abgeschaltet werden kann. In vorteilhafter Weise kann somit die Positionssensoren zum Erfassen der Endlagen der Spindel verzichtet werden. Insbesondere beim Anschlagen der Spindel am Gehäuse wird eine Relativkraft zwischen der Spindel und der Spindelmutter erzeugt, die vom Gehäuse aufgenommen wird. Voraussetzung hierfür ist, dass die Spindelmutter im Gehäuse gelagert ist. Die Gehäuse der Zuziehantriebe sind mehrteilig aufgebaut, so dass insbesondere im Bereich der Aufnahme der Spindelmutter erhöhte Anforderungen gestellt werden, um ein sicheres und dauerhaftes Funktionieren der Zuziehantriebe zu gewährleisten.

Aus der EP 1 451 478 B1 ist ein Spindelantrieb für Verstelleinrichtungen in Kraftfahrtzeugen bekannt.

Ein Problem, das sich bei der Weiterentwicklung von Kraftfahrzeugschlössern und insbesondere bei Stelleinheiten, wie beispielsweise Zuziehantrieben, für Kraftfahrzeugschlösser stellt, ist das, dass auf der einen Seite eine den Anforderungen entsprechende Sicherheit gewährleistet werden muss, so dass die bereitzustellenden Kräfte reproduzierbar und dauerstabil bereitgestellt werden können und dass andererseits ein Bestreben der Kraftfahrzeugindustrie darin liegt, die Kraftfahrzeuge insgesamt leichter auszuführen.

Aufgabe der Erfindung ist es, eine verbesserte Stelleinheit mit einem Stellglied bereitzustellen. Darüber hinaus ist es Aufgabe der Erfindung, eine Stelleinheit mit einem Stellglied bereitzustellen, die einerseits dauerstabil ausgeführt ist, die mit geringstmöglichen Bauelementen ausführbar ist und die mit geringstmöglichen Belastungen auf das Gehäuse auskommt.

Die Lösung der Aufgabe erfolgt erfindungsgemäß durch die Merkmale des unabhängigen Patentanspruchs 1. Vorteilhafte Ausgestaltungen der Erfindung sind in den Unteransprüchen angegeben. Es wird darauf hingewiesen, dass die im Folgenden beschriebenen Ausführungsbeispiele nicht beschränkend sind, es sind vielmehr beliebige Variationsmöglichkeiten der in der Beschreibung und den Unteransprüchen beschriebenen Merkmale möglich.

Gemäß dem Patentanspruch 1 wird die Aufgabe der Erfindung dadurch gelöst, dass eine Stelleinheit mit einem Stellglied, insbesondere ein Zuziehantrieb für ein Kraftfahrzeug bereitgestellt wird, aufweisend eine Antriebseinheit, ein Gehäuse, eine Spindelmutter und eine Spindel, wobei die Spindelmutter im Gehäuse der Stelleinheit aufgenommen ist und einem Bowdenzug, wobei der Bowdenzug mit der Spindel verbunden ist und wobei die Spindel einen Anschlag aufweist, der mit der Spindelmutter zusammenwirkt, so dass eine Wegbegrenzung der Spindel ermöglichbar ist. Durch die erfindungsgemäße Ausgestaltung der Stelleinheit ist nun die Möglichkeit geschaffen, eine verbesserte Stelleinheit bereitzustellen, die geringstmögliche Belastungen für das Gehäuse der Stelleinheit darstellt.

Wesentlich hierfür ist, dass beim Erreichen der Endlage der Spindel die Wegbegrenzung durch die Spindelmutter erzeugt wird, so dass einerseits ein definierter Anschlag zur Verfügung steht, so dass auf Mikroschalter verzichtet werden kann, und andererseits die Relativkraft beim Erreichen des Endanschlages zwischen dem Anschlag der Spindel und der Spindelmutter erzeugt wird. Die Wegbegrenzung, das heißt die Endlage der Spindel, wird somit dadurch erreicht, dass die Spindel gegen die Spindelmutter verfährt, so dass ein Erreichen der Wegbegrenzung keine Kraft auf das Gehäuse der Stelleinheit wirkt. Eine Aufnahme der Spindelmutter im Gehäuse hat lediglich führende, lagernde und/oder haltende Funktionen, es wird aber keine Relativkraft als Abstützung zwischen Spindel und Spindelmutter auf das Gehäuse übertragen. Die Spindel fährt gegen den Endanschlag, erfindungsgemäß die Spindelmutter, so dass die Spindelmutter blockiert wird und es zu einer erhöhten Stromaufnahme des elektrischen Antriebs kommt.

Der elektrische Antrieb erfasst diese erhöhte Stromaufnahme ohne notwendigen Positionssensor oder Mikroschalter und kann dieses Signal der erhöhten Stromaufnahme zur Abschaltung des Motors verwenden. Vorteilhaft dabei ist, dass mit einer geringstmöglichen Anzahl von Bauelementen gearbeitet werden kann, das Gehäuse geringstmöglich belastet wird und dadurch eine dauerstabile Ausführung bereitgestellt werden kann.

Als Stelleinheiten werden elektromotorisch betriebene und mit einem Spindelmuttergetriebe versehene Antriebe angesehen, die bevorzugt in Kraftfahrzeugen zum Einsatz kommen. Einsatzgebiete können, wie einführend bereits aufgezählt, Zuziehantriebe, Aktuatoren für zum Beispiel automatisch umklappbare Kopfstützen oder Rücksitzbanklehnen sein. Stelleinheit können aber zum Beispiel auch zum Öffnen einer Tankklappe, einer Heckklappe oder einer Motorhaube eingesetzt werden, um nur beispielhaft einige Anwendungsfälle zu benennen. Darüber hinaus können Stelleinheiten auch zum Verschließen von Fächern oder Abdeckungen eingesetzt werden.

Bevorzugt wird die erfindungsgemäße Stelleinheit mit einem Stellglied als Zuziehantrieb für ein Kraftfahrzeugschloss eingesetzt. Herstellungs- wie auch montagebedingt weist die Stelleinheit ein zum Beispiel zweiteiliges Gehäuse auf. Dabei kann das Gehäuse einseitig zur Aufnahme des Motors und des Getriebes bzw. des Spindelantriebs ausgeführt sein und andererseits einen Gehäusedeckel umfassen, mittels dem die Stelleinheit bevorzugt wasserdicht verschlossen wird. Im Folgenden wird der dem Motor und das Getriebe aufnehmende Gehäuseteil als aufnehmendes Gehäuse und der Gehäuseteil, der das Gehäuse verschließt, als Gehäusedeckel. Die erfindungsgemäße Stelleinheit weist eine Spindelmutter und eine Spindel auf. Dabei ist die Spindelmutter im Gehäuse gelagert. Die Lagerung der Spindelmutter erfolgt im aufnehmenden Gehäuse und im Gehäusedeckel. Die Spindelmutter wird von einer Antriebseinheit angetrieben, die bevorzugt aus einem Elektromotor mit einer Abtriebswelle und einem Schneckenrad besteht. Das Schneckenrad kann hierbei auf eine äußere Verzahnung der Spindelmutter wirken. Die Spindelmutter treibt die Spindel an, die längsverschieblich im aufnehmenden Gehäuse und in der Spindelmutter gelagert ist.

Bevorzugt weist die Spindelmutter ein Innengewinde auf, in das eine Verzahnung der Spindel eingreift bzw. mit dem die Verzahnung auf der Spindel zusammenwirkt. Die Spindel bildet das Stellglied, wobei ein Bowdenzug kraft-, form- und stoffschlüssig mit der Spindel verbunden ist.

Bei einer Bewegung der Spindel stützt sich die Spindelmutter zur Übertragung einer Kraft im Gehäuse ab. Einseitig weist die Spindel, gemäß der Erfindung, einen Endanschlag auf, der bei einem Verfahren der Spindel aus der Spindelmutter heraus an der Spindelmutter zur Anlage kommt. Die Spindelmutter bildet somit einseitig einen Anschlag für die Spindel, so dass mittels der Spindelmutter eine Wegbegrenzung für die Spindel realisierbar ist. In vorteilhafter Weise wird durch diesen Anschlag und insbesondere bei einem Herausfahren der Spindel in Richtung des aufnehmenden Gehäuseteils, bei dem der Bowdenzug aus dem Gehäuse heraus bewegt wird, das Gehäuse der Stelleinheit geringstmöglich belastet.

In der Erfindung ist der Anschlag als separates Anschlagmittel ausgebildet. Einerseits aus Sicht einer günstigen Herstellbarkeit der Spindel und andererseits um eine möglichst kostengünstige Montage zu ermöglichen, wird erfindungsgemäß vorgeschlagen, dass Anschlagmittel auf der Spindel als separates Bauteil auszubilden. Dies kann beispielsweise dann vorteilhaft sein, wenn die Spindel auf der dem Anschlag gegenüberliegenden Ende zum Beispiel mit einem Führungselement ausgestattet ist, wobei das Führungselement einen größeren Durchmesser aufweist als die Spindel, so dass die Montage der Spindel durch die Spindelmutter hindurch erfolgt. Vorteilhaft ist dabei, dass der Anschlag je nach Einsatzgebiet der Stelleinheit und Belastung auf die Spindel bzw. den Anschlag individuell auswählbar ist. Bei großen Kräften kann beispielsweise ein Anschlag aus Stahl und bei geringeren Kräften ein Anschlag aus einem kostengünstigeren Werkstoff, wie beispielsweise Kunststoff, gewählt werden.

Erfindungsgemäß ist das separate Anschlagmittel formschlüssig mit der Spindel verbunden. Eine formschlüssige Verbindung bietet den Vorteil einer schnellen und kostengünstigen Montagemöglichkeit, die darüber hinaus kostengünstig herstellbar ist. Erfindungsgemäß ist das separate Anschlagmittel ein Federring, wobei der Federring formschlüssig auf der Spindel gehalten ist. Wird beispielsweise an dem anschlagseitigen Ende der Spindel eine Nut in die Spindel eingeformt, so kann ein Federring in die Nut hineinmontiert werden, wobei der Federring über die Nut hinaussteht und als Anschlag für die Spindel dienen kann. Ein Federring bietet dabei den Vorteil, dass diese in einer großen Vielzahl und in genormter Art und Weise und somit kostengünstig zur Verfügung stehen. Darüber hinaus ist ein Nut in eine Spindel leicht einformbar, so dass eine kostengünstige Lösung der Aufgabe zur Verfügung gestellt wird. Die Verwendung eines Federrings ermöglicht es hierbei zusätzlich, eine leichte und schnelle Montage eines Anschlags auf der Spindel zu realisieren.

Weist der Anschlag ein federndes und/oder dämpfendes Element auf, so ergibt sich eine weitere Ausführungsform der Erfindung, wobei mittels des federnden und/oder dämpfenden Elementes zwischen Anschlag und Spindelmutter wirkt, so dass ein gefedertes und/oder gedämpftes Anschlagsverhalten realisierbar ist. Der Anschlag wirkt unmittelbar auf die Spindelmutter. Wird nun zwischen dem Anschlag und die Spindelmutter ein federndes und/oder dämpfendes Element eingefügt, so können beispielsweise Geräusche, die beim Anschlagen des Anschlags erzeugt werden, minimiert und/oder eliminiert werden. Ist das Anschlagsmittel beispielsweise ein Federring, der in einer Nut gehalten ist, so kann zum Beispiel eine Federscheibe zwischen Federring und Spindelmutter in die Nut eingefügt werden, so dass die Spindel beim Herausfahren aus der Spindelmutter und vor dem Anschlagen des Anschlags auf der Spindelmutter zuerst auf die Federscheibe trifft und somit ein federndes Anschlagen realisierbar ist. Vorstellbar ist aber auch, dass in einer Ausführungsform der Anschlag und die Spindel einstückig ausgebildet sind und ein dämpfender, zum Beispiel gummielastischer Kunststoff, auf dem Anschlag aufgebracht wurde, so dass der gummielastische Kunststoff zwischen Anschlag und Spindelmutter wirkt. Hierdurch wäre dann ein gedämpftes Anschlagsverhalten realisierbar. Es könnte aber auch zum Beispiel ein gummielastischer Kunststoffring zwischen Anschlag und Spindelmutter eingelegt werden, der dann dämpfend zwischen Anschlag und Spindelmutter wirkt.

In einer Ausführungsform der Erfindung ist die Spindelmutter mittels eines Lagers, insbesondere eines Kugellagers, im Gehäuse aufgenommen. Die Aufnahme der Spindelmutter im aufnehmenden Gehäuse bietet den Vorteil einer genauen, sicheren und spielfreien Lagerung der Spindelmutter. Dabei kann das Kugellager darüber hinaus als Widerlager dienen, insbesondere dann, wenn eine Zugbelastung auf die Spindel wirkt, zum Beispiel in dem Falle, in dem über den Bowdenzug Kräfte in zum Beispiel ein Seitentürschloss eingeleitet werden. Das Lager wirkt dann zwischen Spindelmutter und aufnehmendem Gehäuse, wobei die über die Spindel in die Spindelmutter eingeleitete Stützkraft auf das Lager und letztlich auf das aufnehmende Gehäuse übertragbar ist.

Entgegen dem bekannten Stand der Technik, bei dem der Anschlag der Spindel gegen das aufnehmende Gehäuse wirkt, wird gemäß der Erfindung beim Herausfahren der Spindel der Endanschlag der Spindel dadurch erzielt, dass der Anschlag der Spindel gegen die Spindelmutter wirkt. In diesem Fall wirkt lediglich eine Relativkraft zwischen Anschlag und Spindelmutter und es wird keine Kraft auf den Gehäusedeckel ausgeübt. Gemäß dem Stand der Technik stützte sich die Spindel über den Anschlag am aufnehmenden Gehäuse ab, so dass die Spindelmutter gegen den Gehäusedeckel als Widerlager gedrückt wurde.

Dies wird durch die erfindungsgemäße Ausbildung des Anschlags, der gegen die Spindelmutter wirkt, umgangen, so dass lediglich eine Relativbewegung zwischen Spindel und Spindelmutter entsteht, wodurch einerseits die Spindelmutter in der Bewegung begrenzt wird, was zu einem erhöhten Stromanstieg im elektromotorischen Antrieb führt, wobei der Anstieg der Stromaufnahme als Signal zum Abschalten des elektrischen Antriebs dienen kann. Die Funktionalität der Stelleinheit wird somit gewährleistet, die Krafteinleitung durch die Spindel in das Gehäuse wird aber verbessert, so dass geringere Anforderungen an zum Beispiel die Dichtheit zwischen Gehäusedeckel und aufnehmendem Gehäuse gestellt werden können, sich wieder positiv auf die Konstruktion und letztlich auf die Herstellungskosten auswirkt.

Weist die Spindel an einem dem Anschlag entgegengesetzten Ende ein Führungselement auf, wobei das Führungselement mit dem Gehäuse zusammenwirkt, so ergibt sich eine weitere vorteilhafte Ausgestaltung der Erfindung. Das Führungselement kann beispielsweise einstückig an die Spindel angeformt sein. Dabei dient das Führungselement dazu, die Spindel im Gehäuse zu führen und kann gleichzeitig zur Aufnahme des Bowdenzugs dienen. Eine Führung der Spindel kann vorteilhafterweise die Bewegung der Spindel in der Spindelmutter unterstützen, insbesondere dann, wenn große Kräfte über den Bowdenzug in das Spindelgetriebe eingeleitet werden. Das Führungselement kann auch als separates Führungselement auf der Spindel montiert sein, so dass beispielsweise unterschiedliche Werkstoffe, die die Führungseigenschaften des Führungselements positiv beeinflussen, auswählbar sind.

Weist die Spindelmutter eine Vertiefung auf, und ist der Anschlag in die Spindelmutter hinein bewegbar und kommt an der Spindelmutter zum Anschlag, so ergibt sich eine weitere Ausführungsform der Erfindung. Bevorzugt weist die Spindelmutter eine Außenverzahnung auf, mittels derer die Spindelmutter antreibbar ist. Die Spindel wird mittels eines Innengewindes an der Spindelmutter angetrieben. Ist nun die Spindelmutter zumindest bereichsweise mit einer Ausnehmung oder Vertiefung versehen, so dass der an der Spindel vorhandene Anschlag in die Spindelmutter einfahrbar ist, so kann eine sehr kompakte Bauweise der Stelleinheit realisiert werden. Neben einer kompakteren Bauweise der Stelleinheit kann somit auch ein optimaler Materialeinsatz bei der Herstellung des Spindelgetriebes realisiert werden.

Nachfolgend wird die Erfindung unter Bezugnahme auf die anliegenden Zeichnungen anhand eines bevorzugten Ausführungsbeispiels näher erläutert. Es gilt jedoch der Grundsatz, dass das Ausführungsbeispiel die Erfindung nicht beschränkt, sondern lediglich eine vorteilhafte Ausführungsform darstellt. Die dargestellten Merkmale können einzeln oder in Kombination mit weiteren Merkmalen der Beschreibung wie auch den Patentansprüchen einzeln oder in Kombination ausgeführt werden.

Es zeigen:
- Fig. 1: einen Querschnitt durch ein Stellglied gemäß dem Stand der Technik im Bereich des Spindelantriebs, wobei der Schnitt durch die Spindelmutter, die Spindel und den Bowdenzug gelegt ist,
- Fig. 2: ein erfindungsgemäß ausgeführtes Stellglied, das ebenfalls im Schnitt im Bereich der Spindel bzw. Spindelmutter dargestellt ist, und
- Fig. 3: eine separate Ansicht auf eine erfindungsgemäß ausgebildete Spindel, eine Spindelmutter und eine Lagerung für die Spindelmutter als separate Bauteile losgelöst vom Stellglied.

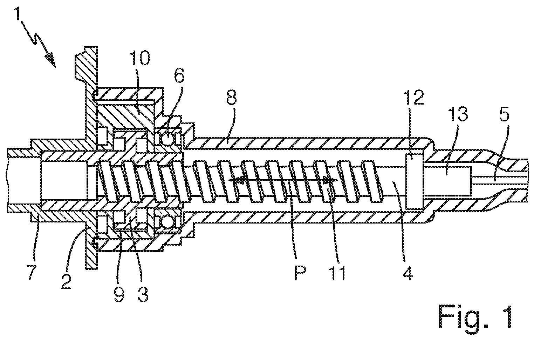

In der Fig. 1 ist eine Stelleinheit 1 gemäß dem Stand der Technik dargestellt, wie sie beispielsweise aus der DE 10 2012 218 650 A1 bekannt geworden ist. Die Stelleinheit 1 weist ein Gehäuse 2, eine Spindelmutter 3, eine Spindel 4, einen Bowdenzug 5, sowie ein Lager 6 auf. Das Gehäuse 2 wird aus dem Gehäusedeckel 7 und dem die Antriebselemente aufnehmenden Gehäuse 8 gebildet. Die Spindelmutter 3 ist einseitig im Lager 6 und auf der gegenüberliegenden Seite im Gehäusedeckel 7 drehbar gelagert. Die Spindelmutter 3 umfasst eine Verzahnung 9, in die ein lediglich angedeutetes Schneckenrad 10 eines Antriebsmotors eingreifen kann.

Die Spindel 4 ist mit einer wendelförmigen Verzahnung 11 versehen, so dass bei einer Drehbewegung der Spindelmutter 3 die Spindel in Richtung des Pfeils P hin und her bewegbar ist. Dargestellt ist der vollständig ausgefahrene Zustand der Spindel 4 aus der Spindelmutter 3, wobei eine radialumfänglich angebrachte, zylindrische Verlängerung 12 als Anschlag am Gehäuse 8 dient. Einseitig liegt die Spindel 4 mit der Verlängerung 12 am aufnehmenden Gehäuse 8 an, wobei sich die Spindelmutter 3 am Gehäusedeckel 7 abstützt. In dieser vollständig ausgefahrenen Position der Spindel 4 aus der Spindelmutter 3 wirkt eine Relativkraft zwischen dem aufnehmenden Gehäuse 8 und dem Gehäusedeckel 7. Der Bowdenzug 5 ist in diesem Ausführungsbeispiel im Bereich 13 mit der Spindel 4 verbunden.

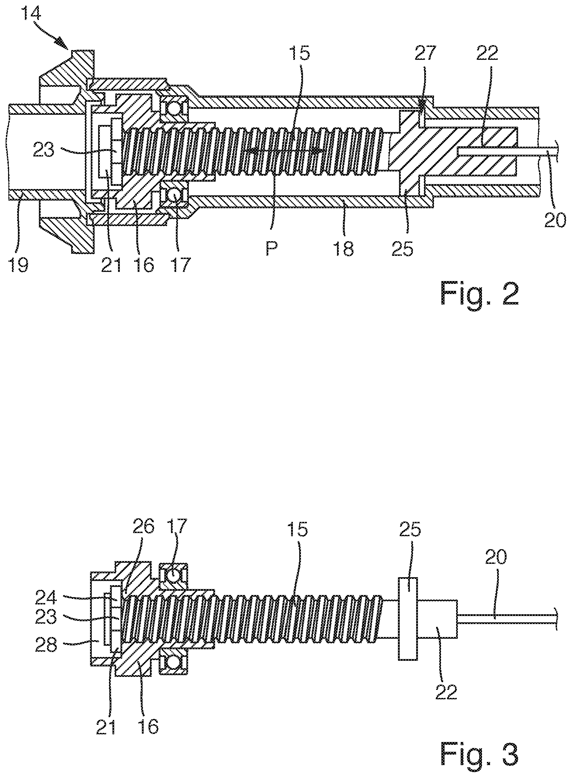

In der Fig. 2 ist eine Stelleinheit 14 gemäß der Erfindung im Schnitt und im Bereich des Stellglieds 15 wiedergegeben. Die Stelleinheit weist eine Spindelmutter 16, eine Spindel 15, die gleichzeitig das Stellglied bildet, ein Lager 17, ein aufnehmendes Gehäuse 18, einen Gehäusedeckel 19 sowie einen Bowdenzug 20 auf. Die Spindel 15 ist in Richtung des Pfeils P und mittels der Spindelmutter 16 und eines vorzugsweise elektrischen Antriebes, hin und her verfahrbar. Dargestellt ist die vollständig herausgefahrene Position der Spindel 15, so dass ein Anschlagmittel 21 an der Spindelmutter 16 zur Anlage kommt. Herausgefahren bedeutet hierbei, dass sich die Spindel 15 in der in der in Fig. 2 dargestellten Position befindet. Der Bowdenzug 20, der im Anbindungsbereich 22 fest mit der Spindel 15 verbunden ist, wurde vollständig aus der Stelleinheit 14 herausbewegt.

Die Spindel 15 weist eine Nut auf, in der in diesem Ausführungsbeispiel ein Federring als Anschlag 21 eingefügt wurde. Auf einem dem Anschlag 21 entgegengesetzten Ende der Spindel 15 ist ein Führungselement 25 vorgesehen, das die Spindel 15 im aufnehmenden Gehäuseteil 18 führt.

Wird die Spindel 15 mittels einer Drehbewegung der Spindelmutter 16 in die Spindelmutter hineinbewegt, so entfernt sich der Anschlag 21 von der Spindelmutter 16. In diesem Fall wird der Bowdenzug 20 in die Stelleinheit 14 hineingezogen. Dabei stützt sich die Spindelmutter 16 am Lager 17 und somit am Gehäuse 18 ab. Wird nun der Bowdenzug 20 aus der Stelleinheit 14 herausbewegt, so kommt der Anschlag 21 an einer ringförmigen Erhebung der Spindelmutter 16 zur Anlage. In diesem Ausführungsbeispiel gelangt der Federring 24 zur Anlage an der ringförmigen Erhebung. Die Spindel 15 kann nicht weiter bewegt werden, so dass die Drehbewegung der Spindelmutter 16 durch die Spindel 15 bzw. den Anschlag 21 gebremst wird. Die dabei entstehende erhöhte Stromaufnahme des Antriebs kann als Signal zum Abschalten des bevorzugt elektromotorischen Antriebs genutzt werden.

Von Bedeutung für die Erfindung ist dabei, dass es zu keiner Relativkraft zwischen der Spindelmutter 16 und dem Gehäuse 18, 19 der Stelleinheit 14 kommt. Eine Relativkraft liegt zwischen dem Anschlag 21 und der Spindelmutter 16 vor. Hierdurch wird das Gehäuse geringstmöglich belastet. Das Führungselement 25 führt die Spindel 15 im aufnehmenden Gehäuse 18, kommt aber nicht am Gehäuse 18 zur Anlage. Es verbleibt ein Spalt 27 zwischen dem Führungselement 25 und dem aufnehmenden Gehäuse 18.

Die Ausführungsform gemäß der Figuren 2 und 3 der Erfindung zeigen, dass der Anschlag 21 in einer Vertiefung 28 der Spindelmutter 16 an der Spindelmutter 16 zur Anlage kommt, wodurch der Bauraum der Stelleinheit 14 in vorteilhafter Weise weiter reduziert werden kann.

Die Spindel 15 weist als ein wendelförmig bezeichenbares Gewinde auf und ist im zylinderförmigen Anbindungsbereich 22 des Bowdenzugs 20 mit einem vorzugsweise ringförmig ausgebildeten Führungselement 25 versehen. Bevorzugt ist das Führungselement einstückig mit der Spindel 15 ausgebildet. Ebenfalls bevorzugt ist die Spindel 15 aus einem Kunststoff gebildet, wobei der Bowdenzug 20 beispielsweise in einem Spritzgießverfahren an die Spindel 15 angebunden werden kann.

### Bezugszeichenliste

- 1: Stelleinheit
- 2: Gehäuse
- 3: Spindelmutter
- 4: Spindel
- 5: Bowdenzug
- 6: Lager
- 7: Gehäusedeckel
- 8: aufnehmendes Gehäuse
- 9: Verzahnung
- 10: Schneckenrad
- 11: wendelförmige Verzahnung
- 12: Verlängerung
- 13: Anbindungsbereich des Bowdenzugs
- 14: Stelleinheit
- 15: Stellglied, Spindel
- 16: Spindelmutter
- 17: Lager
- 18: aufnehmendes Gehäuse
- 19: Gehäusedeckel
- 20: Bowdenzug
- 21: Anschlag
- 22: Anbindungsbereich
- 23: Nut
- 24: Federring
- 25: Führungselement
- 26: ringförmige Erhebung
- 27: Spalt
- 28: Vertiefung
- P: Bewegungsrichtung der Spindel

## Patentansprüche

1. Stelleinheit (14) mit einem Stellglied (15), insbesondere ein Zuziehantrieb für ein Kraftfahrzeugschloss, aufweisend eine Antriebseinheit, ein Gehäuse (18, 19), eine Spindelmutter (16) und eine Spindel (15), wobei die Spindelmutter (16) im Gehäuse (18, 19) der Stelleinheit (14) aufgenommen ist und einem Bowdenzug (20), wobei der Bowdenzug (20) mit der Spindel (15) verbunden ist, wobei die Spindel (15) einen als separates Anschlagmittel ausgebildeten Anschlag (21) aufweist, der mit der Spindelmutter (16) zusammenwirkt, so dass eine Wegbegrenzung der Spindel (15) ermöglichbar ist, **dadurch gekennzeichnet, dass** das separate Anschlagmittel (21) ein Federring (24) ist, wobei der Federring (24) formschlüssig auf der Spindel (15) gehalten ist.

2. Stelleinheit (14) nach Anspruch 1, **dadurch gekennzeichnet, dass** der Anschlag (21) ein federndes und/oder dämpfendes Element aufweist, wobei mittels des federnden und/oder dämpfenden Elementes zwischen Anschlag (21) und Spindelmutter (16) wirkt, so dass ein gefedertes und/oder gedämpftes Anschlagverhalten realisierbar ist.

3. Stelleinheit (14) nach einem der Ansprüche 1 oder 2, **dadurch gekennzeichnet, dass** die Spindelmutter (16) mittels eines Lagers (17), insbesondere eines Kugellagers (17), im Gehäuse (18, 19) aufgenommen ist.

4. Stelleinheit (14) nach einem der Ansprüche 1 bis 3, **dadurch gekennzeichnet, dass** die Spindel (15) an einem dem Anschlag (21) entgegengesetzten Ende ein Führungselement (25) aufweist, wobei das Führungselement (25) mit dem Gehäuse (18, 19) zusammenwirkt.

5. Stelleinheit (14) nach einem der Ansprüche 1 bis 4, **dadurch gekennzeichnet, dass** die Spindelmutter (16) eine Vertiefung (28) aufweist und der Anschlag (21) in die Spindelmutter (16) hinein bewegbar ist, und an der Spindelmutter (16) an einer Erhebung (26) zur Anlage kommt.

## Claims

1. Actuator unit (14) with an actuator element (15), in particular a closure drive for a motor vehicle latch, having a drive unit, a housing (18, 19), a spindle nut (16) and a spindle (15), wherein the spindle nut (16) is accommodated in the housing (18, 19) of the actuator unit (14) and a Bowden cable (20), wherein the Bowden cable (20) is connected to the spindle (15), wherein the spindle (15) has a stop (21) formed as a separate stop means which interacts with the spindle nut (16) so that it is possible to limit the path of the spindle (15), **characterized in that** the separate stop means (21) is a spring ring (24), wherein the spring ring (24) is held on the spindle (15) in a form-fitting manner.

2. Actuator unit (14) according to claim 1, **characterized in that** the stop (21) has a spring-loaded and/or attenuating element, whereby by means of the springing and/or attenuating element action takes place between the stop (21) and the spindle nut (16) so that a sprung and/or attenuated stop behavior can be achieved.

3. Actuator unit (14) according to one of the claims 1 or 2, **characterized in that** the spindle nut (16) is accommodated in the housing (18, 19) using a bearing (17), in particular a ball bearing (17).

4. Actuator unit (14) according to one of the claims 1 to 3, **characterized in that** the spindle (15) has a guide element (25) at an end opposite the stop (21), wherein the guide element (25) interacts with the housing (18, 19).

5. Actuator unit (14) according to one of the claims 1 to 4, **characterized in that** the spindle nut (16) has a depression (28) and the stop (21) can be moved into the spindle nut (16), and is adjacent to an elevation (26) on the spindle nut (16).

## Revendications

1. Unité d'actionneur (14) à actionneur (15), notamment un mécanisme de fermeture destiné à une serrure de voiture, dotée d'un système d'entraînement, d'un boîtier (18, 19), d'un écrou de broche (16) et d'une broche (15), à savoir que l'écrou de broche (16) est positionné dans le boîtier (18, 19) de l'unite d'actionneur (14), et d'un câble Bowden (20), à savoir que le câble Bowden (20) est relié à la broche (15), à savoir que la broche (15) présente une butée (21) ayant la forme d'une butée séparée, agissant avec l'écrou de broche (16), permettant ainsi de limiter la course de la broche (15), **caractérisée en ce que** la butée séparée (21) est une rondelle-ressort (24), à savoir que cette rondelle-ressort (24) est aligné sur la broche (15).

2. Unité d'actionneur (14) selon la revendication 1, **caractérisée en ce que** la butée (21) est dotée d'un élément résilient et/ou amortissant, à savoir que cet élément résilient et/ou amortissant agit entre la butée (21) et l'écrou de broche (16), de sorte qu'il est possible d'obtenir un comportement de butée suspendu et/ou amorti.

3. Unite d'actionneur (14) selon une des revendications 1 ou 2, **caractérisée en ce que** l'écrou de broche (16) est logé, à l'aide d'un palier (17), notamment d'un palier à billes (17), dans le boîtier (18, 19).

4. Unite d'actionneur (14) selon une des revendications 1 à 3, **caractérisée en ce que** la broche (15) présente un élément de guidage (25) situé à l'opposé de la butée (21), à savoir que cet élément de guidage (25) interagit avec le boîtier (18, 19).

5. Unite d'actionneur (14) selon une des revendications 1 à 4, **caractérisée en ce que** l'écrou de broche (16) présente un renfoncement (28) et que la butée (21) peut être déplacée dans l'écrou de broche (16), et se met en position d'arrêt au niveau de l'écrou de broche (16), contre une élévation (26).
